# EUROPÄISCHE PATENTSCHRIFT

(11) **EP 3 221 680 B1**
(45) Veröffentlichungstag und Bekanntmachung des Hinweises auf die Patenterteilung: **05.12.2018**
(21) Anmeldenummer: 15781356.9
(22) Anmeldetag: 19.10.2015
(51) Int. Cl.: B60G 7/00, G01L 1/18, B60G 17/019, G01L 1/22

(54) **MECHANISCHES BAUTEIL MIT EINEM KRAFTSENSOR**
MECHANICAL COMPONENT HAVING A FORCE SENSOR
PIÈCE MÉCANIQUE COMPORTANT UN CAPTEUR DE FORCE

(30) Priorität: 20.11.2014 DE 102014223657
(43) Veröffentlichungstag der Anmeldung: 27.09.2017
(73) Patentinhaber: ZF Friedrichshafen AG, 88046 Friedrichshafen (DE)
(72) Erfinder: HASKAMP, Klaus, 49413 Dinklage (DE); KLANK, Michael, 49084 Osnabrück (DE); HOFMANN, Peter, 82319 Starnberg (DE)
(86) Internationale Anmeldenummer: PCT/EP2015/074086
(87) Internationale Veröffentlichungsnummer: WO 2016/078845

(56) Entgegenhaltungen:
- EP-A1- 2 524 827
- WO-A1-2004/065926
- WO-A1-2011/065921

## Beschreibung

Die Erfindung betrifft ein mechanisches Bauteil für ein Fahrzeug, aufweisend einen Messbereich mit einer Oberfläche und einen dem Messbereich zugeordneten Kraftsensor zur Erfassung einer das Bauteil beanspruchenden Kraft. Die Erfindung betrifft auch eine Verwendung eines speziellen Kraftsensors.

Aus der WO 2004/065926 A1 und der WO 2011/065921 A1 ist jeweils ein mechanisches Bauteil für ein Fahrzeug bekannt, das einen Messbereich mit einer Oberfläche und einem dem Messbereich zugeordneten Kraftsensor zur Erfassung einer das Bauteil beanspruchenden Kraft aufweist, wobei der Kraftsensor eine auf die Oberfläche des Messbereiches aufgebrachte Schicht aus Carbon Nanotubes umfasst.

Der EP 2 524 827 A1 ist ein Wankstabilisator mit Pendelstäben zu entnehmen, wobei ein Kraftsensor in der Gestalt eines Federkörper-Kraftsensors, Membran-Kraftsensors oder Piezo-Kraftsensors, an einem Pendelstab oder an einem Verbindungselement, beispielsweise in der Gestalt eines Kugelgelenks, angeordnet ist.

In der älteren Anmeldung der Anmelderin mit dem Aktenzeichen 10 2013 213 672.2 ist ein mechanisches Bauteil mit einem Kraftsensor offenbart, wobei das mechanische Bauteil in einer bevorzugten Ausführungsform als Pendelstütze und der Kraftsensor als biegeelastisches Verformungselement ausgebildet ist, welcher innerhalb eines Messbereiches formschlüssig mit der Pendelstütze verbunden ist. Das Verformungselement wirkt dabei als Verstärker einer mechanischen Beanspruchung in der stabförmig ausgebildeten Pendelstütze, in welcher erste Linie Zug- und Druckspannungen auftreten. Die aus einer Druck- oder Zugspannung resultierende Stauchung oder Dehnung der Pendelstütze wird auf das bogenförmig ausgebildete Verformungselement übertragen und bewirkt eine Biegung, wodurch die Dehnung oder Stauchung verstärkt wird. Die mechanische Änderung des Verformungselements, welches aus einem magnetischen Material hergestellt ist, geht mit einer Änderung des Magnetfeldes einher, was messbar und in elektrische Signale umwandelbar ist. Die Verformung des Verformungselements wird durch eine geeignete Sensorik, vorzugsweise unter Durchführung einer Magnetfeldmessung erfasst.

Durch die DE 10 2011 117 519 A1 wurde eine Anhängerkupplung mit einem Kraftsensor bekannt, wobei der Kraftsensor vorzugsweise als Dehnungsmessstreifen ausgebildet und auf der Oberfläche des Kupplungshakens angeordnet ist.

Es ist eine Aufgabe der vorliegenden Erfindung, weitere Potenziale der Kraftmessung an mechanischen Bauteilen auszuschöpfen.

Die Aufgabe der Erfindung wird durch die Merkmale des unabhängigen Patentanspruchs 1 gelöst. Vorteilhafte Ausgestaltungen ergeben sich aus den Unteransprüchen.

Nach einem ersten Aspekt der Erfindung ist vorgesehen, dass der Kraftsensor als eine auf die Oberfläche des Messbereiches aufgebrachte Schicht aus Carbon Nanotubes (CNT) oder Kohlenstoff-Nanoröhrchen ausgebildet ist. Das Material Carbon Nanotubes, im Folgenden CNT genannt, ist an sich bekannt: Es handelt sich um mikroskopisch kleine röhrenförmige Gebilde aus Kohlenstoff. Das CNT-Material, welches erfindungsgemäß Verwendung findet, ist elektrisch leitend und hat ferner die Eigenschaft, dass es bei mechanischer Beanspruchung, z. B. einer Dehnung oder Stauchung infolge einer Krafteinwirkung seinen elektrischen Widerstand ändert. Dieser Effekt wird erfindungsgemäß genutzt, um das CNT-Material als sensitives Element eines Kraftsensors zu nutzen. Dabei wird das CNT-Material als Schicht auf die Oberfläche des beanspruchten Bauteils aufgebracht. Dies hat den Vorteil, dass das sensitive Element direkt im Kraftfluss des Bauteils liegt, d. h. eine Dehnung oder Stauchung des beanspruchten Bauteils wird unmittelbar auf die CNT-Schicht, welche auf der Oberfläche des Bauteils haftet, übertragen. Dabei ergibt sich eine genaue Kraftmessung. Vorteilhaft ist ferner, dass das CNT-Material, welches in einem geeigneten Binder, bevorzugt in Form eines Lackes, enthalten ist, einfach auf das Bauteil appliziert werden kann, vorzugsweise durch Auftragen.

Nach einer bevorzugten Ausführungsform ist zwischen der CNT-Schicht und der Oberfläche des Bauteils eine Isolationsschicht angeordnet, welche die elektrisch leitende CNT-Schicht gegenüber dem elektrisch leitenden Bauteil isoliert. Die CNT-Schicht kann also nach dem Aufbringen der Isolationsschicht aufgetragen werden.
Insofern das mechanische Bauteil aus einem elektrisch nicht leitfähigen Material, bevorzugt aus Kunststoff, hergestellt ist erübrigt sich die Isolationsschicht.
Nach einer weiteren bevorzugten Ausführungsform weist die elektrisch leitende CNT-Schicht mindestens eine Eingangs- und mindestens eine Ausgangskontaktierung auf. Wie bereits erwähnt, erfolgt die Kraftmessung durch Messung der Änderung des elektrischen Widerstandes der CNT-Schicht infolge mechanischer Beanspruchung des Bauteiles. Zwischen den Kontaktierungen wird die CNT-Schicht bevorzugt insbesondere von einem konstanten Strom durchflossen, wobei sich bei einer Änderung des elektrischen Widerstandes eine Änderung der Spannung ergibt, welche als Signal messbar und auswertbar ist. Alternativ kann die Messung auch bei variablem, nicht konstantem Strom gemessen werden.
Nach einer weiteren bevorzugten Ausführungsform sind die Eingangs- und Ausgangskontaktierungen über elektrische Leiter mit einer Auswerteelektronik und einer Stromquelle verbunden. Über die Auswerteelektronik wird das elektrische Signal, insbesondere das Spannungssignal, in ein Signal umgewandelt, welches repräsentativ für die gemessene Beanspruchung des Bauteiles ist.
Nach einer weiteren bevorzugten Ausführungsform ist die CNT-Schicht als auf der Oberfläche haftende Lackschicht ausgebildet. Das CNT-Material ist somit in einem Lack enthalten, welcher in einfacher Weise auf den Messbereich des Bauteiles aufgetragen werden kann und dort eine dauerhafte, widerstandsfähige Schicht bildet.

Erfindungsgemäß ist das mechanische Bauteil als Pendelstütze eines Fahrwerks ausgebildet, wobei die stabförmig ausgebildete Pendelstütze über ein Kugelgelenk mit einem Kugelzapfen verbunden ist. Die CNT-Schicht respektive die Lackschicht ist auf dem konisch ausgebildeten Kugelzapfen aufgetragen. In diesem Falle ergibt sich der Vorteil, dass die in der Pendelstütze wirkende axiale Zug- oder Druckkraft eine Biegespannung im Kugelzapfen hervorruft und somit verstärkt wird. In der auf dem Kugelzapfen aufgebrachten CNT-Schicht tritt somit eine stärkere Dehnung oder Stauchung (Verformung) und somit ein stärkeres Signal auf, d. h., es ist eine genauere Messung möglich.
Nach einem weiteren Aspekt der Erfindung ist die Verwendung des CNT-Materials als sensitives Element für einen Kraftsensor vorgesehen. Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen. Ebenso liegt es im Rahmen der Erfindung, eine mechanische Umkehr der Funktionen der einzelnen mechanischen Elemente der Erfindung zu bewirken.
Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen
Fig. 1 einen erfindungsgemäßen Kraftsensor mit einer CNT-Schicht an einer Pendelstütze,
Fig. 2 eine schematische Darstellung von CNT-Schichten und
Fig. 3 eine Einzelheit aus Fig. 1 (den Kraftsensor aus Fig. 1 als Einzelheit).

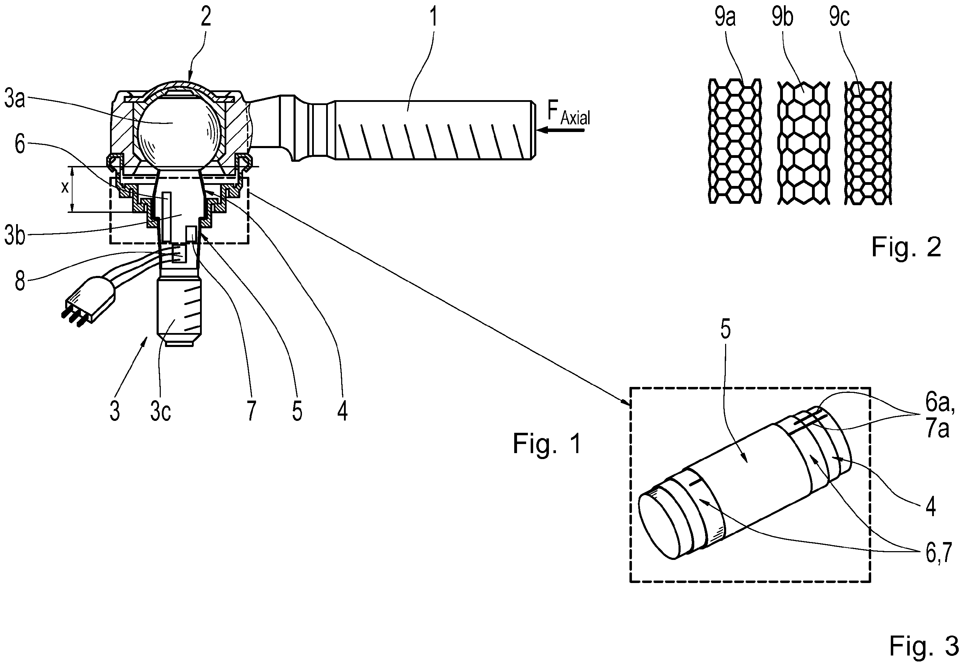

Fig. 1 zeigt eine verkürzt dargestellte, stabförmig ausgebildete Pendelstütze 1, die mit ihrem freien nicht dargestellten Ende gelenkig mit einem Stabilisator eines Fahrwerks für ein Kraftfahrzeug verbunden ist. Die Pendelstütze 1, die ein Ausführungsbeispiel eines mechanischen Bauteils darstellt, wird mit einer Axialkraft F_{Axial} belastet und ist über ein Kugelgelenk 2 mit einem Kugelzapfen 3 verbunden, wobei der Kugelzapfen 3 einen Kugelkopf 3a, einen Schaft 3b und einen Gewindeabschnitt 3c aufweist. Über den Gewindeabschnitt 3c ist der Kugelzapfen 3 in nicht dargestellter Weise fest mit einem weiteren Fahrwerksbauteil, z. B. einem Federbein verbunden. Der Kugelzapfen 3 ist also - statisch betrachtet - im Bereich des Gewindeabschnitts 3c eingespannt, während auf den Kugelkopf 3a die Axialkraft F_{Axial} wirkt und damit ein Biegemoment auf den Schaft 3b sowie eine radial auf die Kugel des Kugelgelenks wirkende Kraft ausübt. Demzufolge ergeben sich im Bereich des Schaftes 3b Biegespannungen, welche sich aus Druck- und Zugspannungen zusammensetzen. Die aus den Zug- und Druckspannungen resultierenden Verformungen, d. h. einerseits Dehnungen und andererseits Stauchungen im Bereich der Oberfläche des Schaftes 3b sollen gemessen werden. Die Beträge der Biegespannungen im Bereich des Schaftes 3b sind wesentlich höher als die Beträge der Druckspannungen in der Pendelstütze 1, sodass sich ein Verstärkungseffekt ergibt.

Nach einem Ausführungsbeispiel ist auf die Oberfläche des Schaftes 3b eine Isolationsschicht 4 und auf die Isolationsschicht 4 eine Schicht aus Carbon Nanotubes aufgebracht. Die Carbon-Nanotubes-Schicht, im Folgenden abgekürzt CNT-Schicht genannt, dient erfindungsgemäß als sensitives Element oder Sensorelement eines Kraftsensors und ist mit zwei elektrischen Kontaktierungen, einer Eingangskontaktierung 6 und einer Ausgangskontaktierung 7 versehen. Die Kontaktierungen 6, 7 sind über elektrische Leiter (ohne Bezugszahl) mit einer Auswerteelektronik 8 und diese über einen elektrischen Anschluss (ohne Bezugszahl) mit einer nicht dargestellten Stromquelle verbunden. Der Abstand zwischen der Eingangs- und Ausgangskontaktierung 6, 7 in axialer Richtung des Kugelzapfens 3 ist mit x bezeichnet, d. h. dieser Bereich bildet den Messbereich der CNT-Schicht 5, welche von einem Strom durchflossen wird. In diesem Bereich treten aufgrund der Biegebeanspruchung relativ starke Dehnungen und Stauchungen auf, welche sich direkt auf die CNT-Schicht 5 übertragen, die damit ihren elektrischen Widerstand ändert.
Fig. 2 zeigt in schematischer Darstellung den Aufbau von verschiedenen CNT-Strukturen 9a, 9b, 9c. Wie bekannt, besteht das CNT-Material aus feinsten Kohlenstoffröhrchen im Nanobereich, welche - wie die Abbildung zeigt - hexagonal angeordnet, d. h. sie bilden eine wabenartige Struktur. Das CNT-Material verändert bei mechanischer Beanspruchung seine elektrische Leitfähigkeit.

Fig. 3 zeigt eine Einzelheit aus Fig. 1, gekennzeichnet durch ein gestricheltes Rechteck. Die Einzelheit zeigt den Aufbau des erfindungsgemäßen sensitiven Elements für einen Kraftsensor. Für gleiche oder analoge Teile werden gleiche Bezugszahlen wie in Fig. 1 verwendet. Auf das zylindrisch ausgebildete Bauteil, im Ausführungsbeispiel der Schaft 3b, wird zunächst die Isolationsschicht 4 und anschließend die CNT-Schicht 5 aufgetragen. Die Isolationsschicht 4 dient der elektrischen Isolierung der elektrisch leitenden CNT-Schicht 5 gegenüber dem elektrisch leitenden Bauteil 3b. Die CNT-Schicht 5 weist an ihren beiden axial versetzt angeordneten Enden elektrische Kontaktierungen 6, 7 auf, die mit elektrischen Leitern 6a, 7a verbunden sind. Die elektrischen Leiter 6a, 7a sind mit der in Fig. 1 dargestellten Auswertelektronik 8 verbunden. Die CNT-Schicht 5 kann bevorzugt als die CNT-Bestandteile bindende Lackschicht ausgebildet sein, welche sich besonders einfach auf das Bauteil 3b auftragen lässt.

Der erfindungsgemäße Kraftsensor mit dem als CNT-Schicht 5 ausgebildeten sensitiven Element funktioniert wie folgt: Bei einer Belastung des Pendelstabes 1 durch die Axialkraft F_{Axial} wird der eingespannte Schaft 3b des Kugelzapfens 3 auf Biegung beansprucht, sodass im Bereich x des Schafts 3b verstärkte Dehnungen (in der Zugfaser) und Stauchungen (in der Druckfaser) auftreten. Diese Verformungen übertragen sich unmittelbar auf die mit der Oberfläche des Schaftes 3b fest verbundene CNT-Schicht 5, sodass auch die CNT-Schicht 5 diesen Verformungen unterworfen ist. Dies führt zu einer Änderung des elektrischen Widerstandes der CNT-Schicht 5. Letztere wird aufgrund der Kontaktierungen 6, 7 vorzugsweise von einem Konstantstrom durchflossen, sodass bei Änderungen des elektrischen Widerstandes eine Änderung der Spannung auftritt, welche der Auswerteelektronik 8 zugeführt und als Signal verwertet wird. Mit dem elektrischen Signal kann aufgrund der Gesetze der Mechanik die im Pendelstab 1 wirkende Axialkraft berechnet werden. Die berechnete Größe der Axialkraft dient als Ausgangsgröße für eine aktive Wankstabilisierung des Fahrzeuges.

### Bezugszeichen

- 1: Pendelstütze
- 2: Kugelgelenk
- 3: Kugelzapfen
- 3a: Kugelkopf
- 3b: Schaft
- 3c: Gewindeabschnitt
- 4: Isolationsschicht
- 5: CNT-Schicht
- 6: Eingangskontaktierung
- 6a: elektrischer Leiter
- 7: Ausgangskontaktierung
- 7a: elektrischer Leiter
- 8: Auswerteelektronik
- 9a: CNT-Struktur
- 9b: CNT-Struktur
- 9c: CNT-Struktur

- x: Messbereich
- F_{Axial}: Axialkraft

## Patentansprüche

1. Mechanisches Bauteil für ein Fahrzeug, aufweisend einen Messbereich mit einer Oberfläche und einem dem Messbereich zugeordneten Kraftsensor zur Erfassung einer das Bauteil beanspruchenden Kraft, wobei der Kraftsensor eine auf die Oberfläche des Messbereiches (x) aufgebrachte Schicht (5) aus Carbon Nanotubes, im folgenden CNT-Schicht (5) genannt, umfasst, **dadurch gekennzeichnet, dass** das mechanische Bauteil als Pendelstütze (1) eines Fahrwerks ausgebildet ist, die Pendelstütze (1) über ein Kugelgelenk (2) mit einem einen Schaft (3b) aufweisenden Kugelzapfen (3) verbunden ist und die CNT-Schicht (5) auf den konisch ausgebildeten Schaft (3b) des Kugelzapfens (3) aufgebracht ist.

2. Mechanisches Bauteil nach Anspruch 1, **dadurch gekennzeichnet, dass** zwischen der CNT-Schicht (5) und der Oberfläche des Bauteils (3b) eine Isolationsschicht (4) angeordnet ist.

3. Mechanisches Bauteil nach Anspruch 1 oder 2, **dadurch gekennzeichnet, dass** die CNT-Schicht (5) eine elektrisch leitende Verbindung bildet und mindestens eine Eingangskontaktierung (6) sowie mindestens eine Ausgangskontaktierung (7) aufweist.

4. Mechanisches Bauteil nach Anspruch 3, **dadurch gekennzeichnet, dass** die Eingangs- und Ausgangskontaktierungen (6, 7) über elektrische Leiter (6a, 7a) mit einer Auswerteelektronik (8) und einer Stromquelle verbunden sind.

5. Mechanisches Bauteil nach einem der Ansprüche 1 bis 4, **dadurch gekennzeichnet, dass** die CNT-Schicht (5) als auf der Oberfläche des Bauteils (3b) haftende Lackschicht ausgebildet ist.

## Claims

1. Mechanical component for a vehicle, having a measuring area with a surface and a force sensor assigned to the measuring area for detecting a force loading the component, the force sensor comprising a layer (5) of carbon nanotubes, called the CNT layer (5) below, applied to the surface of the measuring area (x), **characterized in that** the mechanical component is formed as a pendulum support (1) of a chassis, the pendulum support (1) is connected via a ball joint (2) to a ball stub (3) having a shaft (3b), and the CNT layer (5) is applied to the conically formed shaft (3b) of the ball stub (3).

2. Mechanical component according to Claim 1, **characterized in that** an insulating layer (4) is arranged between the CNT layer (5) and the surface of the component (3b).

3. Mechanical component according to Claim 1 or 2, **characterized in that** the CNT layer (5) forms an electrically conductive connection and has at least one input contacting means (6) and at least one output contacting means (7).

4. Mechanical component according to Claim 3, **characterized in that** the input and output contacting means (6, 7) are connected via electric conductors (6a, 7a) to evaluation electronics (8) and a power source.

5. Mechanical component according to one of Claims 1 to 4, **characterized in that** the CNT layer (5) is formed as a varnish layer adhering to the surface of the component (3b).

## Revendications

1. Composant mécanique pour un véhicule, présentant une région de mesure avec une surface et un capteur de force associé à la région de mesure pour détecter une force sollicitant le composant, le capteur de force comprenant une couche (5) en nanotubes de carbone appliquée sur la surface de la région de mesure (x), ci-après désignée par couche CNT (5), **caractérisé en ce que** le composant mécanique est réalisé sous forme de support oscillant (1) d'un châssis, le support oscillant (1) est connecté par le biais d'une articulation sphérique (2) à un goujon sphérique (3) présentant une tige (3b) et la couche CNT (5) est appliquée sur la tige (3b), réalisée sous forme conique, du goujon sphérique (3).

2. Composant mécanique selon la revendication 1, **caractérisé en ce qu'**entre la couche CNT (5) et la surface du composant (3b) est disposée une couche d'isolation (4).

3. Composant mécanique selon la revendication 1 ou 2, **caractérisé en ce que** la couche CNT (5) forme une connexion électriquement conductrice et présente au moins un contact d'entrée (6) ainsi qu'au moins un contact de sortie (7).

4. Composant mécanique selon la revendication 3, **caractérisé en ce que** les contacts d'entrée et de sortie (6, 7) sont connectés par le biais de conducteurs électriques (6a, 7a) à une électronique d'analyse (8) et à une source de courant.

5. Composant mécanique selon l'une quelconque des revendications 1 à 4, **caractérisé en ce que** la couche CNT (5) est réalisée sous forme de couche de laque adhérant à la surface du composant (3b).
